# EUROPEAN PATENT SPECIFICATION

(11) **EP 3 583 616 B1**
(45) Date of publication and mention of the grant of the patent: **07.08.2024**
(21) Application number: 18849321.7
(22) Date of filing: 07.06.2018
(51) Int. Cl.: H01F 38/14, H02J 50/10, H02J 7/00, H04B 5/26, H04B 5/79, B60K 17/22, F16D 3/38, G08C 19/02

(54) **A MECHANICAL EMBODIMENT PROVIDING CONTINUOUS WIRELESS POWER TRANSMISSION ON CARDAN SHAFT**
MECHANISCHE AUSFÜHRUNG ZUR BEREITSTELLUNG EINER KONTINUIERLICHEN DRAHTLOSEN KRAFTÜBERTRAGUNG AUF EINER KARDANWELLE
MODE DE RÉALISATION MÉCANIQUE ASSURANT UNE TRANSMISSION DE PUISSANCE SANS FIL CONTINUE SUR UN ARBRE À CARDAN

(30) Priority: 08.06.2017 TR 201708500
(43) Date of publication of application: 25.12.2019
(73) Proprietor: Tirsan Kardan Sanayi Ve Ticaret Anonim Sirketi, Yunusemre - Manisa (TR)
(72) Inventor: TASAN, Korkut, Manisa (TR); SIMSAROGLU, Ferit, Manisa (TR); SEN, Onur, Manisa (TR); DAVAZLI, Sebahattin, Manisa (TR); TARAKÇI, Sedat, Manisa (TR)
(74) Representative: Yamankaradeniz, Kemal
(86) International application number: PCT/TR2018/050294
(87) International publication number: WO 2019/040031

(56) References cited:
- EP-A1- 0 286 095
- WO-A2-2014/155334
- CN-A- 106 769 039
- US-A- 4 865 470
- US-A1- 2005 017 602
- US-A1- 2014 339 943
- US-A1- 2017 074 327

## Description

### THE RELATED ART

The invention relates to a mechanical embodiment with a cardan shaft, the mechanical embodiment comprising a fixed transmitter coil and a rotary coil, located in order to supply uninterrupted wireless power supply on the cardan shaft, and an electronic circuit performing data transfer on the cardan shaft, supplied by the receiver coil.

### BACKGROUND OF THE RELATED ART

In current related art wireless data transmission method is used to measure parameters such as temperature, torque, cycle etc. on the rotary mechanical components. For this purpose an electronic circuit performing transfer of data measured on the rotary mechanical components and receiver and transmitter coils providing wireless power transmission to such electronic circuit are used.

The prior art is not able to apply onto cardan shaft permanently due to need for placement of a fixed transmitter coil supplied from a permanent power supply away from cardan shaft, onto a rotary mechanical component. Permanent case means the status of being on cardan shaft continuously and becoming part of it.

In the prior art transmitter coil has to be placed on a fixed place away from cardan shaft. Receiver coil is placed onto the cardan shaft. For that reason, collection of data on cardan shaft can only be possible by means of adding the above mentioned components onto cardan shaft temporarily.

In the state of the art, PCT application with the publication number of WO 2014155334 A2 describes an apparatus and a method for dynamic measurement of parameters on a body subjected to twisting, preferably a rotary shaft. However, it is understood that the apparatus in the document does not include a protector in its embodiments.

CN106769039A relates to a mounting component for monitoring the rotation of a rolling bearing member, and is an improvement of an on-line monitoring system and a conventional component, in particular to a bearing positioning spacer, a lock nut (Including bearings inside and outside the ferrule, cage) temperature, speed, vibration signal, based on these real-time measurement signal, with the exclusive bearing running status assessment and fault diagnosis Algorithm to achieve the operation of the state of the impact of rolling bearings, so that ordinary bearings have a sense of the function of intelligent bearings.

US 2017/0074327 A1 discloses a sensor arrangement and rolling bearing having such a sensor arrangement.

### BRIEF DESCRIPTION OF THE INVENTION

The invention relates to a mechanical embodiment having wireless power transmission components onto it to eliminate the above mentioned disadvantages and bring some new advantages in the related art.

Main purpose of the invention is to provide a mechanical embodiment with wireless power transmission coils on the cardan shaft and with an electronic circuit providing data transmission on the cardan shaft. Another purpose of the invention is to provide a mechanical embodiment enabling operation of wireless power transmission components without being affected by environmental conditions.

A further purpose of the invention is to disclose a mechanical embodiment having a light and compact structure providing adaptation of wireless power transmission components onto cardan shaft permanently.

In order to achieve all of the purposes mentioned above and to be stated in the following detailed description, the invention provides a mechanical embodiment with a cardan shaft part as defined in present claim 1.

In order to better understand the present invention as well as the advantages thereof, it should be assessed with reference to the following described figures.

### BRIEF DESCRIPTION OF FIGURES

Figure 1 is a rear view of mechanical embodiment of the invention showing adaptation of it onto a cardan shaft.
Figure 2 is a front view of mechanical embodiment of the invention showing adaptation of it onto a cardan shaft.
Figure 3 is a view of mechanical embodiment of the invention showing adaptation of it onto a cardan shaft.
Figures 4a, 4b, 4c are views of fixed coil support, rotary coil support and protector respectively.

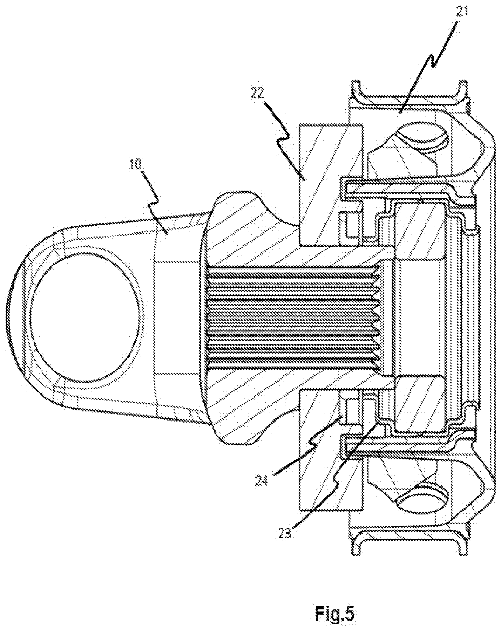

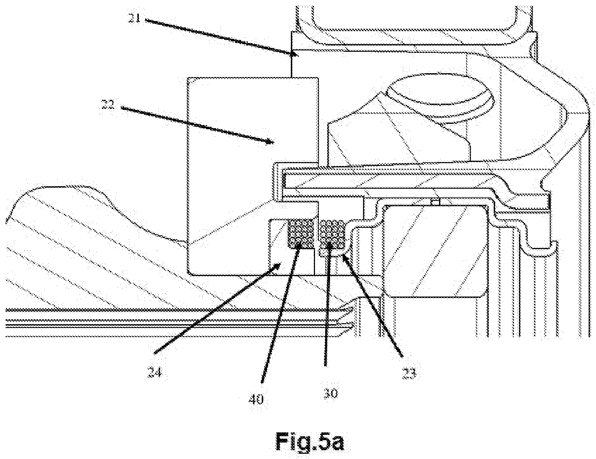

Figure 5 is a cross-section view of mechanical embodiment of the invention showing adaptation of it onto a cardan shaft.
Figure 5a is a detailed cross-section view of mechanical embodiment of the invention showing adaptation of it onto a cardan shaft.

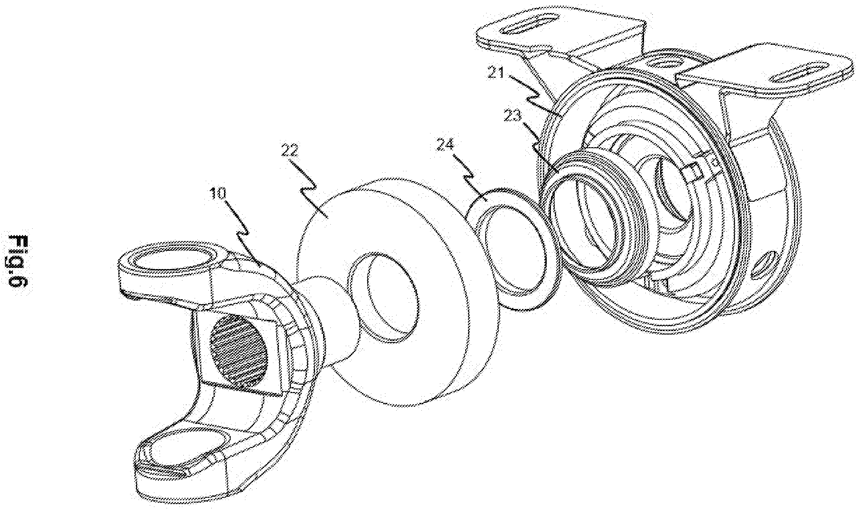

Figure 6 is a perspective exploded view of the mechanical embodiment being subject of the invention,

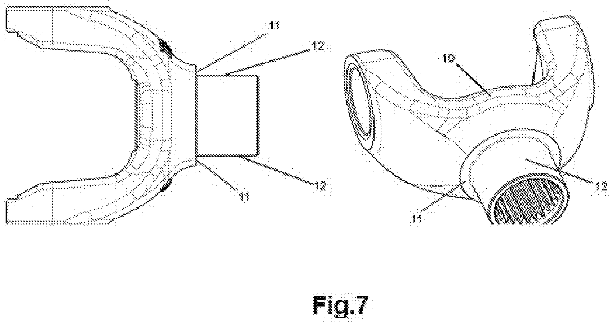

Figure 7 is perspective view of unit part of cardan shaft.

### REFERENCE NUMBERS

10 Cardan Shaft Unit Part
11 Abutment Surface
12 Seating Surface
20 Mechanical Embodiment
21 Center bearing
22 Protector
   221 First Cavity
   222 Second Cavity
23 Fixed Coil Support
231 Coil Support Surface
232 Center bearing Seating Surface
24 Rotary Coil Support
30 Transmitter Coil
40 Receiver Coil

### DETAILED DESCRIPTION OF THE INVENTION

The mechanical embodiment with a cardan shaft unit part of the invention is disclosed with samples described in a manner not causing any restrictive effect.

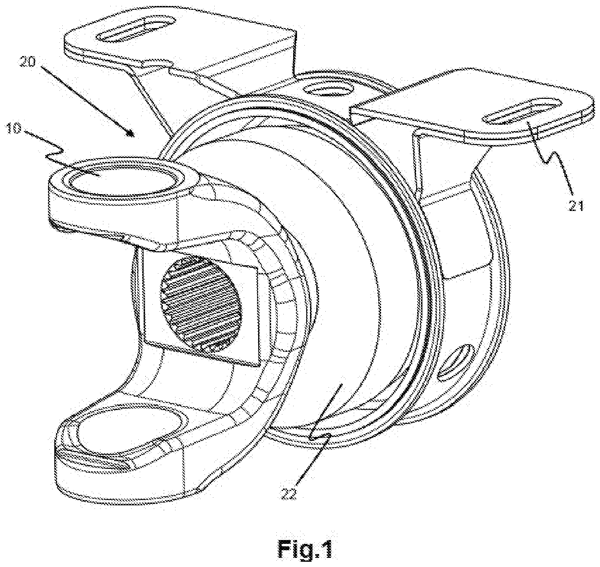

Figure 1 shows the mechanical embodiment (20) providing continuous wireless power transmission on cardan shaft connect to with cardan shaft rotary unit part (10). According to it, an electronic circuit performing data transfer on cardan shaft and a coil system performing wireless power transmission to the electronic circuit are located in the mechanical embodiment (20).

Coil system providing wireless power transmission to the electronic circuit consists of a transmitter coil (30) and a receiver coil (40). The transmitter coil (30) receives power from a power source and provides power transmission to the receiver coil (40). Uninterrupted power supply can only be possible by means of transmission of power from fixed power source to the rotary coil to supply rotating electronic circuit on cardan shaft via a fixed coil integrated onto cardan shaft. For that reason, transmitter coil (30) must remain fixed so that it can perform its functions uninterruptedly. One of the main functions of the mechanical embodiment (20) disclosed under the invention is that it keeps transmitter coil (30) fixed even when the cardan shaft is in rotating status. Uninterrupted power is supplied to the electronic circuit by means of rotary receiver coil (40) located on the cardan shaft unit part (10) and rotating together with it. Thus continuous wireless power supply is provided and data transfer on cardan shaft can be made uninterruptedly. Another important function of the mechanical embodiment (20) is that it protects the electronic circuit and coils against external effects.

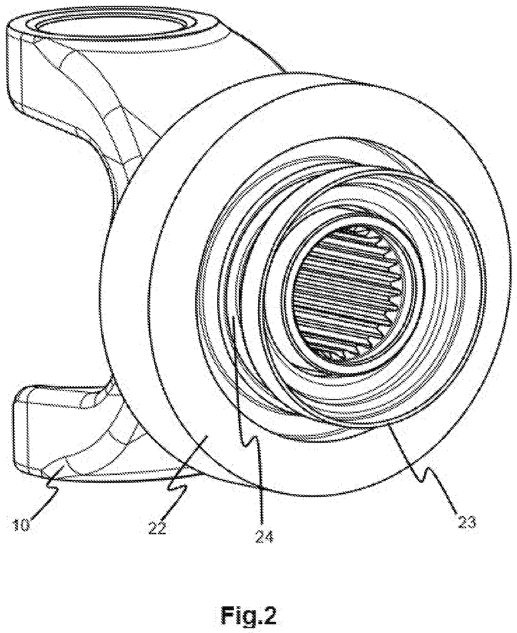

As shown in figure 2, the mechanical embodiment (20) comprises of a center bearing (21), a protector (22) surrounding the electronic circuit, a fixed coil support (23) wherein transmitter coil (30) is located and a rotary coil support (24) wherein the receiver coil (40) is located.

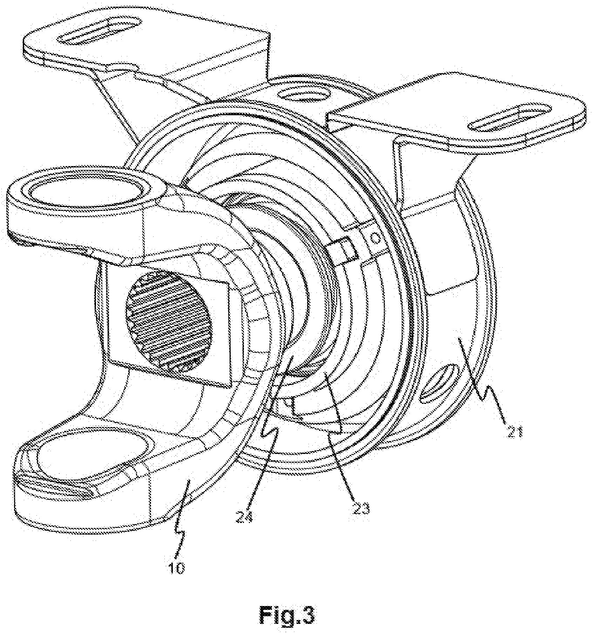

As shown in figure 3, the fixed coil support (23) is located on the center bearing (21) and rotary coil support (24) is located on seating surface (12) on the rotary coil support (24) of the rotating shaft unit part (10). Thus transmitter coil (30) is located on the cardan shaft but does not rotate together with cardan shaft unit part (10). Receiver coil (40) integrated to rotary coil support (24) is mounted on the rotating cardan shaft unit part (10) and rotates together with cardan shaft. Thus when cardan shaft rotates, transmitter coil (30) remaining fixed continues to supply wireless power to receiver coil (40). The distance between the transmitter coil (30) and the receiver coil (40) is kept short as much as power transfer can be performed and to the extent the design permits.

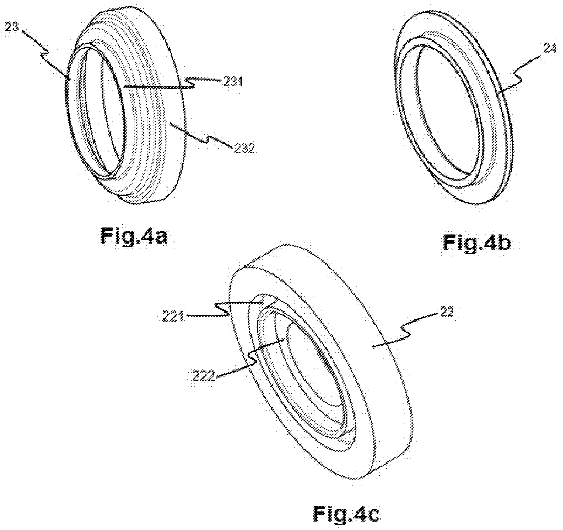

As shown in Figure 4a, fixed coil support (23) consists of a center bearing seating surface or surfaces (232) providing mounting onto the center bearing (21) and a coil support surface (231) where transmitter coil (30) is located. The fixed coil support (23) is fixed onto the center bearing (21) by means of said seating surfaces (232). Coil support surface (231) is designed in a manner that it supports the coil having the most efficient winding can be supported for power transfer and that the receiver coil (40) winding and the transmitter coil (30) winding are located at same level mutually. The protector (22) carries the electronic circuit and also protects the fixed coil support (23) and the rotary coil support (24) against external effects. Thus the electronic circuit and coils can work without being influenced by environmental conditions. The protector (22) may comprise of one or more than one part. The protector (22) is located on the seating surface (12) on the cardan shaft unit part (10) and contacts abutment surface (11) on the cardan shaft unit part (10) and fixes the status. The protector (22) consists of an first cavity (221) structured in a manner to provide adaptation to the center bearing (21) geometry and a second cavity (222) in order to the rotary coil support (24) is structured in a manner to provide adaptation to rotary coil support (24) geometry.

The mechanical embodiment (20) disclosed under the invention discloses a light and compact structure and provides permanently mounting of the wireless power transmission components and electronic circuit onto the cardan shaft.

Thanks to compact structure of the invention, wireless power transmission components can be adapted onto cardan shaft in a manner not recognizable from outside. Thus the mechanical embodiment (20) appears as a natural extension of the cardan shaft.

## Claims

1. A mechanical embodiment (20) with a cardan shaft unit part (10), the mechanical embodiment comprising a transmitter coil (30) and a receiver coil (40) located to provide wireless power transmission on a cardan shaft of the cardan shaft unit part (10), wherein in order to perform the wireless power transmission on the cardan shaft uninterruptedly, it comprises
• a center bearing (21) located on the cardan shaft,
• a A- fixed coil support (23) carrying the transmitter coil (30) and located on said center bearing (21) in such manner that it does not contact rotary components of the cardan shaft and thus ensuring the transmitter coil to be fixed,
• a rotary coil support (24) supporting the receiver coil (40) and located on
the cardan shaft to rotate together with the cardan shaft,
• an electronic circuit performing data transfer on the cardan shaft,
• a protector (22) carrying the electronic circuit supplied with power by said receiver coil (40), the protector (22) being located on a seating surface (12) on the cardan shaft unit part (10) to rotate together with the cardan shaft and being em4located on the center bearing (21) in a manner surrounding the rotary coil support (24) and protecting the fixed coil support (23) and the rotary coil support (24) against external effects,
wherein the transmitter coil (30) and the receiver coil (40) are formed cylindrically around the cardan shaft and are arranged next to each other in the length direction of the cardan shaft.

2. The mechanical embodiment (20) with a cardan shaft unit part according to claim 1
wherein the fixed coil support 23 comprises a center bearing seating surface (232) providing mounting onto the center bearing (21).

3. The mechanical embodiment (20) with a cardan shaft unit part according to claim 1
wherein said fixed coil support (23) comprises a coil support surface (231) where the transmitter coil (30) is located.

4. The mechanical embodiment (20) with a cardan shaft unit part according to claim 1
wherein the protector (22) comprises a first cavity (221) structured in a manner to provide adaptation to the center bearing (21) geometry.

5. The mechanical embodiment (20) with a cardan shaft unit part according to claim 4
wherein the protector (22) comprises a second cavity (222) structured in a manner to provide adaptation to the rotary coil support (24) geometry.

6. The mechanical embodiment (20) with a cardan shaft unit part according to claim 1
wherein the protector (22) and rotary coil support (24) are located on a seating surface (12) structured on the cardan shaft.

7. The mechanical embodiment (20) with a cardan shaft unit part according to claim
1 wherein the position of the protector (22) is fixed by means of contact of it to an abutment surface (11) structured on the cardan shaft.

## Patentansprüche

1. Mechanische Ausführung (20) mit einem Kardanwelleneinheitsteil (10), wobei die mechanische Ausführung eine Senderspule (30) und eine Empfängerspule (40) umfasst, die so befindlich sind, dass sie drahtlose Kraftübertragung auf einer Kardanwelle des Kardanwelleneinheitsteils (10) bereitstellen, wobei sie, um die drahtlose Kraftübertragung auf der Kardanwelle unterbrechungsfrei durchzuführen, Folgendes umfasst
• ein auf der Kardanwelle befindliches Mittellager (21),
• eine feststehende Spulenstütze (23), die die Senderspule (30) trägt und auf derartige Weise auf dem Mittellager (21) befindlich ist, dass sie keine drehenden Komponenten der Kardanwelle kontaktiert, und somit sicherstellt, dass die Senderspule feststehend ist,
• eine drehende Spulenstütze (24), die die Empfängerspule (40) stützt und auf der Kardanwelle befindlich ist, um sich zusammen mit der Kardanwelle zu drehen,
• eine elektronische Schaltung, die Datentransfer auf der Kardanwelle durchführt,
• einen Schutz (22), der die elektronische Schaltung trägt, die durch die Empfängerspule (40) mit Kraft versorgt wird, wobei der Schutz (22) auf einer Sitzoberfläche (12) auf dem Kardanwelleneinheitsteil (10) befindlich ist, um sich zusammen mit der Kardanwelle zu drehen, und auf eine Weise auf dem Mittellager (21) befindlich ist, dass er die drehende Spulenstütze (24) umgibt und die feststehende Spulenstütze (23) und die drehende Spulenstütze (24) vor äußeren Einwirkungen schützt,
wobei die Senderspule (30) und die Empfängerspule (40) zylindrisch um die Kardanwelle herum ausgebildet sind und in der Längenrichtung der Kardanwelle nebeneinander angeordnet sind.

2. Mechanische Ausführung (20) mit einem Kardanwelleneinheitsteil nach Anspruch 1, wobei die feststehende Spulenstütze 23 eine Mittellagersitzoberfläche (232) umfasst, die Montage auf dem Mittellager (21) bereitstellt.

3. Mechanische Ausführung (20) mit einem Kardanwelleneinheitsteil nach Anspruch 1, wobei die feststehende Spulenstütze (23) eine Spulenstützenoberfläche (231) umfasst, auf der die Senderspule (30) befindlich ist.

4. Mechanische Ausführung (20) mit einem Kardanwelleneinheitsteil nach Anspruch 1, wobei der Schutz (22) einen ersten Hohlraum (221) umfasst, der auf eine Weise strukturiert ist, um eine Anpassung an die Geometrie des Mittellagers (21) bereitzustellen.

5. Mechanische Ausführung (20) mit einem Kardanwelleneinheitsteil nach Anspruch 4, wobei der Schutz (22) einen zweiten Hohlraum (222) umfasst, der auf eine Weise strukturiert ist, um eine Anpassung an die Geometrie der drehenden Spulenstütze (24) bereitzustellen.

6. Mechanische Ausführung (20) mit einem Kardanwelleneinheitsteil nach Anspruch 1, wobei der Schutz (22) und die drehende Spulenstütze (24) auf einer an der Kardanwelle strukturierten Sitzoberfläche (12) befindlich sind.

7. Mechanische Ausführung (20) mit einem Kardanwelleneinheitsteil nach Anspruch 1, wobei die Position des Schutzes (22) mittels Kontakts davon mit einer an der Kardanwelle strukturierten Anliegeoberfläche (11) feststehend ist.

## Revendications

1. Mode de réalisation mécanique (20) avec une partie d'unité d'arbre à cardan (10), le mode de réalisation mécanique comprenant une bobine émettrice (30) et une bobine réceptrice (40) situées pour fournir une transmission de puissance sans fil sur un arbre à cardan de la partie d'unité d'arbre à cardan (10), afin d'effectuer la transmission de puissance sans fil sur l'arbre à cardan de manière ininterrompue, ledit mode de réalisation comprenant
• un palier central (21) situé sur l'arbre à cardan,
• un support de bobine fixe (23) portant la bobine émettrice (30) et situé sur ledit palier central (21) d'une façon telle qu'il n'entre pas en contact avec des composants rotatifs de l'arbre à cardan et assurant ainsi la fixation de la bobine émettrice,
• un support de bobine rotative (24) supportant la bobine réceptrice (40) et situé sur l'arbre à cardan pour tourner avec l'arbre à cardan,
• un circuit électronique effectuant le transfert de données sur l'arbre à cardan,
• une protection (22) portant le circuit électronique alimenté en puissance par ladite bobine réceptrice (40), la protection (22) étant située sur une surface d'appui (12) sur la partie d'unité d'arbre à cardan (10) pour tourner ensemble avec l'arbre à cardan et étant située sur le palier central (21) de manière à entourer le support de bobine rotative (24) et à protéger le support de bobine fixe (23) et le support de bobine rotative (24) contre les effets externes, ladite bobine émettrice (30) et ladite bobine réceptrice (40) étant formées de manière cylindrique autour de l'arbre à cardan et étant agencées l'une à côté de l'autre dans la direction de la longueur de l'arbre à cardan.

2. Mode de réalisation mécanique (20) avec une partie d'unité d'arbre à cardan selon la revendication 1, ledit support de bobine fixe 23 comprenant une surface d'appui (232) de palier central permettant un montage sur le palier central (21).

3. Mode de réalisation mécanique (20) avec une partie d'unité d'arbre à cardan selon la revendication 1, ledit support de bobine fixe (23) comprenant une surface de support de bobine (231) où se situe la bobine émettrice (30).

4. Mode de réalisation mécanique (20) avec une partie d'unité d'arbre à cardan selon la revendication 1, ladite protection (22) comprenant une première cavité (221) structurée de manière à fournir une adaptation à la géométrie de palier central (21).

5. Mode de réalisation mécanique (20) avec une partie d'unité d'arbre à cardan selon la revendication 4, ladite protection (22) comprenant une seconde cavité (222) structurée de manière à fournir une adaptation à la géométrie de support de bobine rotative (24).

6. Mode de réalisation mécanique (20) avec une partie d'unité d'arbre à cardan selon la revendication 1, ladite protection (22) et ledit support de bobine rotative (24) étant situés sur une surface d'appui (12) structurée sur l'arbre à cardan.

7. Mode de réalisation mécanique (20) avec une partie d'unité d'arbre à cardan selon la revendication 1, ladite position de la protection (22) étant fixée au moyen de son contact sur une surface de butée (11) structurée sur l'arbre à cardan.
